Europäisches Patentamt

(19) European Patent Office

Office européen des brevets

(11) EP 0 512 249 B1

(12) EUROPEAN PATENT SPECIFICATION

(45) Date of publication and mention
of the grant of the patent:
**10.03.1999 Bulletin 1999/10**

(51) Int. Cl.[6]: **A23L 1/0522**, A23L 1/09,
A23L 1/176, A23L 1/164,
A23L 1/18, A23K 1/14

(21) Application number: 92105617.2

(22) Date of filing: 01.04.1992

(54) **Extruded foods containing high amylose starch**

Extrudierte Nahrungsmittelprodukte, die eine Amylose-Stärke enthalten

Aliments extrudes contenant de l'amidon riche en amylose

(84) Designated Contracting States:
**AT BE CH DE DK ES FR GB IT LI LU NL SE**

(30) Priority: 03.05.1991 US 695112

(43) Date of publication of application:
**11.11.1992 Bulletin 1992/46**

(73) Proprietor:
**National Starch and Chemical Investment
Holding Corporation
Wilmington, Delaware 19809 (US)**

(72) Inventors:
• **Lacourse, Norman
Indianapolis, Indiana 46250 (US)**
• **Altieri, Paul
Belle Mead, New Jersey 08502 (US)**
• **Trksak, Ralph
Manville, New Jersey 08835 (US)**
• **Madaio, Lisa
Leonia, New Jersey 07605 (US)**
• **Chiu, Chung-Wai
Westfield, New Jersey 08840 (US)**
• **Zwiercan, Gary
Califon, New Jersey 07830 (US)**
• **Zallie, James
Hillsborough, New Jersey 08876 (US)**
• **Eden, James
Millstone, New Jersey 08873 (US)**
• **Kasica, James
Whitehouse Station, New Jersey 08889 (US)**

(74) Representative:
**Hagemann, Heinrich, Dr.rer.nat., Dipl.-Chem. et
al
Patentanwälte
Hagemann, Braun & Held,
Postfach 86 03 29
81630 München (DE)**

(56) References cited:
EP-A- 0 390 960          EP-B- 0 390 960
US-A- 3 407 070

• **CEREAL CHEMISTRY. vol. 65, no. 2, 1988,
MINNEAPOLIS US pages 138 - 143; R.
CHINNASWAMY: 'Relationship Between
Amylose Content and Extrusion-Expansion
Properties of Corn Starches'**

**Description**

This invention relates to a method for preparing a dry, extruded, ready-to-eat, flaked or puffed expanded cereal and cereals prepared according to this method. The cereals comprise a a pregelatinized, cold or hot water soluble high amylose starch or flour having an amylose content of at least 65% by weight.

EP-A-0 390 960 discloses a process for the extrusion of gelled products, such as jelly gum confectioneries or pharmaceutical products, in a cooker or former extruder which uses unique spray-dried pregelatinized high amylose starches alone or in blends with selected starches to provide extrudates which quickly set and form gels.

US-A-3 407 070 discloses ready-to-eat food products and a method for their preparation which comprises admixing a farinaceous base with a high amylose starch product, moisturizing the resulting blend, subjecting it to the simultaneous action of heat, pressure and mixing in order to form the desired shape-retaining food product, and thereafter putting the food product into its final edible from by means of a suitable cooking operation.

Cereal Chemistry, Vol. 65, No. 2, 1988, p. 138-143 describes the relationship between amylose content and extrusion-expansion properties of corn starches. Corn starches with 0 to 70% amylose contents where extrusion cooked at different temperatures and moisture contents. The expansion ratio of starch increased from 8 to 1.4 as amylose content increased from 0 to 50% and than decreased.

Native high amylose starches are corn starches from hybrid varieties of corn which contain at least about 40% amylose. In contrast, ordinary corn starch typically contains about 28% amylose. As used herein, "high amylose starch" includes starch comprising at least about 65% amylose, obtained from hybrid strains of corn, as well as other starches which contain added isolated amylose, or which have been enzymatically debranched to yield a starch comprising at least about 65% amylose. This debranched starch may comprise both native long chain amylose and short chain amylose generated by debranching amylopectin molecules.

Because amylose, a linear polymer, readily aligns or associates through hydrogen bonding, starches containing large amounts of amylose will form more rigid gels and stronger, tougher films, and will provide surfaces having reduced air, water and oil absorption and migration in food applications, relative to ordinary starches which typically contain much less than 65% amylose. Other advantages include improved binding properties where the starch primarily functions as an adhesive and the related property of improved cling or adhesion between dissimilar food substrates. The unique binding, film forming, structural and textural characteristics of the high amylose starches make them useful in dry extruded foods, wherein these starches provide improved organoleptic qualities. In particular expansion properties are improved and formulations may be modified to contain more fiber, have better moisture resistance, and the like, without sacrificing crispness and textural qualities.

As used herein, "dry" refers to extruded foods containing no more than 15% moisture or extruded foods of the semi-moist type, containing more than 15% moisture, but having a water activity ($a_w$) of less than 0.8.

At the relatively low moisture content (e.g., 10-20%) of low water activity, extruded foods (e.g., cereals, snacks, bread crumbs, pet foods), granular high amylose starches will not gelatinize under extrusion conditions typically used to manufacture such foods. More rigorous conditions must be used to gelatinize (and thereby, solubilize) high amylose starch. High amylose starches that have not been solubilized by the processes herein do not provide desirable textural and organoleptic qualities, such as crispness, moisture-impervious film barriers, expansion and binding properties. The use of more rigorous extrusion conditions or a higher moisture content is not commercially feasible in the manufacture of low water activity (e.g., at an $a_w$ of less than 0.8) extruded foods.

Due to the highly bonded linear structure of high amylose starches, full and effective gelatinization of granular high amylose starches typically requires cooking temperatures of about 154-171°C, when the starch contains about 70% amylose. Thus, to obtain high amylose starches, or foods containing such starches, which are soluble in hot or cold water, super atmospheric cooking temperatures are usually required. Furthermore, traditional methods of starch pregelatinization typically produce high amylose starches that are retrograded, or have crystalline long chain amylose portions or are otherwise incapable of full dispersion, or are degraded such that their functional benefits are substantially reduced.

For example, a method for preparing drum-dried, non-granular, pregelatinized isolated potato amylose is described in US-A-3,086,890. The starch slurry is heated to a temperature from just above boiling to 191°C (375°F) and a pressure of about 0.35 to 9.7 Kg/cm² (5 to 140 psi) for 1 to 60 minutes. It is then drum-dried at 110-200°C (230-392°F) for 40-75 seconds and the resulting sheet is pulverized to a dry, porous, white fluffy powder. It was subsequently disclosed in US-A-3,515,591, that the product of the drum-drying method according to US-A-3,086,890 slowly retrogrades upon storage and is unsuited for use in packaged foods. The Feldman patent teaches a different method for preparing cold water soluble high amylose starch which disadvantageously requires the high amylose starch to be solubilized at 140-170°C and mixed with an aqueous suspension of gelatinized starch before drying.

In the alternative, high amylose starches have been modified by derivatization and conversion to enhance their gelatinization and dispersibility characteristics. The use of these "modified starches" is undesirable in food products that are advertised as "natural" products. Gel strength and water resistance qualities of the modified high amylose starches also are reduced in proportion to the amount of modification.

Thus, there is a need for hot or cold water soluble high amylose starches that can be formulated into dry extruded foods without altering the extrusion processes that are traditionally used to manufacture dry extruded foods such as ready-to-eat cereals and snacks.

The present invention provides a method for preparing a dry, extruded, ready-to-eat, flaked or puffed expanded cereal which consists essentially of the steps of: (a) formulating a cereal comprising one or more flours, 1-15% water, and an effective amount of about 5-20% by weight of a pregelatinized, cold or hot water soluble high amylose starch or flour having an amylose content of at least 65% by weight, which starch or flour is selected from the group consisting of (1) a jet-cooked/spray-dried non-granular high amylose starch, characterized in that the starch is substantially non-crystalline, substantially non-retrograded, and fully predispersed; (2) a simultaneously cooked and spray-dried granular high amylose starch characterized in that the starch is uniformly gelatinized and in the form of granular indented spheres, with a least a majority of the granules being whole and unbroken and being in the form of loosely-bound agglomerates or individual granules; (3) a pre-extruded, fully predispersed high amylose starch or flour, or (4) a combination thereof; (b) extruding the cereal at a temperature of up to 160°C and at a pressure of up to 500 psi; (c) cutting the extrudate into pieces; and (d) toasting the cut extruded pieces.

These starches are soluble in either hot or cold water, or both. As used herein, "soluble" means that the high amylose starches in powdered form may be readily hydrated and dispersed in hot or cold water or other aqueous medium to provide a starch solution in the form of a complex colloidal dispersion, rather than a true molecular solution. Crystalline short chain amylose starch preparations are soluble only in hot water.

The food formulation contains 1-15% water and, optionally, other ingredients typically used in extruded foods.

Semi-moist or dry, low water activity, extruded foods prepared with soluble high amylose starch are characterized by one or more of the following beneficial properties: stronger structural cells, improved appearance, improved texture, better expansion during extrusion, air-, oil- and/or water-impermeable surfaces; and improved resistance to sogginess (cereals). These foods are easier to extrude when they contain the soluble high amylose starches herein, which in contrast to granular high amylose starches known in the art, can be extruded at normal extrusion conditions of moisture content, pressure and temperature, and can be completely and thoroughly dispersed into the food formulation as a dry blend, or as a pre-dispersion using hot or cold water, prior to extrusion.

The use of particular methods for providing pregelatinized, soluble high amylose starches is a significant feature of the invention. The high amylose starches are cooked and spray-dried under conditions which provide pregelatinized starches with unique properties. Stabilized, unconverted and/or converted high amylose starches (i.e., derivatized starches such as ethers or esters and/or the crosslinked products) may be used as the main component provided the organoleptic or functional qualities of the foods are not adversely affected. The starch may be derived from any high amylose plant source which contains concentrations of about 40-100% amylose, including, for example, high amylose corn and wrinkled pea. The preferred starches are those derived from high amylose corn hybrids, comprising at least 65% amylose.

High amylose starches which are obtained from special hybrids of corn, barley and pea may contain as much as 75% amylose and are more expensive and more difficult to isolate than the typical native starches from more readily available sources such as corn, potato, wheat, rice, tapioca and the like. Most of the readily available starches contain less than 30% amylose. However, a starch containing a high percentage of short chain amylose may be produced from any of the more readily available amylopectin-containing starches by treating the starch with an enzyme capable of cleaving the alpha-1,6-D-glucosidic linkages of the amylopectin. This enzymatic treatment cleaves the branch points on the amylopectin molecule, yielding a mixture of short chain amylose and partially debranched amylopectin, together with any remaining amylopectin or any long chain amylose present in the untreated starch. For use herein, the total amylose content of the debranched starch must be at least 65%, by weight.

Prior to gelatinizing or solubilizing the high amylose starch, the starch may be modified by conversion, crosslinking, derivatization, or a combination thereof. Procedures for carrying out these modifications are conventional and well-known to those skilled in the art and described in such publications as Handbook of Water-Soluble Gums and Resins, Robert L. Davidson (Editor), Chapter 22: "Starch and Its Modifications" by M.W. Rutenberg, McGraw Hill Book Co. (New York) 1980.

The high amylose starch may be solubilized by any of the following processes or a combination of these processes.

Simultaneous Cooking/Spray-Drying Process

A method for preparing suitable spray-dried, granular pregelatinized starches is described in US-A-4,280,851. In this process a slurry of the granular starch is cooked or gelatinized in an atomized state. A slurry of the starch which is to be cooked is injected through an atomization aperture in a nozzle assembly to form a relatively finely-divided spray. A heating medium is also injected through an aperture in the nozzle assembly into the spray of atomized material so as to heat the starch to a temperature effective to gelatinize the starch. An enclosed chamber surrounds the atomization and heating medium injection apertures and defines a vent aperture positioned to enable the heated spray of starch to be atomized again as the starch exits the chamber. Thus, it is a dual-atomization process. The arrangement is such that the lapsed time between passage of the spray of starch through the chamber, i.e., from the atomization aperture and through the vent aperture defines the gelatinization time of the starch. The resulting spray-dried pregelatinized starch comprises uniformly gelatinized starch granules in the form of indented spheres, with a majority of the granules being whole and unbroken and swelling upon rehydration. Nozzles suitable for use in the preparation of these starches are also described in US-A-4,610,760. A process for agglomerating these starches is described in US-A-4,871,398.

A single-atomization method for preparing suitable spray-dried, substantially pregelatinized starch may be used herein. Such a method is described in US-A-5,149,799, which is hereby incorporated by reference.

Drum-drying processes, such as the one disclosed in US-A-3,086,890, have not been successfully used to predisperse or solubilize the native or isolated long chain amyloses due to retrogradation problems. However, drum-drying may be used to solubilize high amylose starches wherein the starches comprise about 65% short chain amylose (i.e., the debranched starches herein). Thus, drum-drying may be used to dry only the enzymatically debranched soluble high amylose starches herein, or blends thereof.

Enzymatic Debranching Process

Starches suitable for enzymatic treatment herein include any amylopectin-containing starch that is susceptible to attack by a debranching enzyme, such as pullulanase, with the resultant hydrolysis of the alpha-1,6-D-glucosidic bond. Suitable starches include corn, potato, sweet potato, wheat, rice, saga, tapioca, sorghum, waxy maize, waxy rice, waxy barley, smooth pea, Canadian pea, high amylose starch varieties, and the like.

The starch is pregelatinized before enzyme treatment to provide a uniformly debranched starch. It may be used in a dried form or as an aqueous dispersion following debranching to form foods having desirable textural properties. Numerous methods of pregelatinizing starch, such as jet-cooking, drum-drying and steam injection atomization processes, are known in the art and may be used before debranching the starch. In a preferred embodiment, the starch is slurried in water and jet-cooked at approximately 149°C (300°F) to instantaneously gelatinize the starch.

Following gelatinization, the starch is enzymatically treated by the methods disclosed in US-A-4,971,723, and US-A-4,937,091. Enzymatic treatment must continue until the starch product comprises at least 65%, by weight, total amylose (short chain amylose and native or long chain amylose).

Converted debranched starches may be used herein. Conversion degrades the starch and reduces the molecular weight of the starch and the viscosity of the cooked starch dispersions. Suitable conversion of the starches to thin-boiling or fluidity starches useful herein may be achieved by standard oxidative, heat, acid or alpha-amylase enzyme conversion techniques which are well known in the art. A method for starch conversion employing alpha-amylase enzyme is disclosed in US-A- No. 4,726,957.

Debranched starches that contain crystalline short chain amylose, preferably at least 65%, by weight, crystalline short chain amylose, are the debranched starches preferred for use in dry, extruded foods. If the debranched starch is obtained in a crystalline form, it may be made cold water soluble by subjecting it to the coupled jet-cooking/spray-drying processes or the steam injection and atomization/spray-drying processes disclosed herein. The crystalline form may be obtained by continuously agitating the reaction mixture during the enzymatic debranching process and drying the reaction product at a temperature of at least 60°C, or, optionally, recovering the crystalline short chain amylose by filtering the reaction product. The debranched starch, particularly the fully debranched starch, remains cold and hot water soluble and does not crystallize or retrograde if the starch solution or dispersion is dried immediately following the completion of the enzyme treatment. Thus to obtain soluble debranched starch, it is preferred to dry the debranched starch as soon as practicable after debranching and preferably no more than 24 hours after debranching.

Coupled Jet-Cooking/ Spray-Drying Process

Spray-dried, pregelatinized, non-granular, substantially non-crystalline, substantially non-retrograded high amylose starches can be provided by a novel continuous coupled jet-cooking/spray-drying process. A suitable process is disclosed in EP-A-0 366 898, which is hereby incorporated by reference. The process comprises the steps of:

(a) forming a slurry or a paste comprising a converted or unconverted high amylose starch and water;
(b) jet-cooking the aqueous slurry or paste of the starch with steam at a temperature sufficient to fully disperse or solubilize the starch;
(c) conveying and introducing the jet-cooked dispersion or solution into a nozzle of a spray-dryer at substantially the same temperature and pressure as the jet-cooking step;
(d) atomizing the jet-cooked dispersion or solution through the nozzle of the spray-dryer;

(e) drying the atomized mist of the jet-cooked starch within the spray-dryer; and

(f) recovering the jet-cooked and spray-dried starch as a water-dispersible or water-soluble powder.

The cooking temperature will depend upon whether a converted or unconverted starch is used. Typical temperatures are about 138-177°C (280-350°F).

The cooking chamber pressure used in the continuous coupled process typically ranges from 1.4 to 10.4 $Kg/cm^2$ (20 to 150 psig), and is the saturation pressure of steam at the temperature used plus the small incremental pressure needed to move the dispersion through the chamber. Cooking chamber pressures suitable for high amylose starches are 5.5 to 10.4 $Kg/cm^2$ (80 to 150 psig), most preferably 6.9 to 9.0 $Kg/cm^2$ (100 to 130 psig) for a starch having an amylose content of about 70%.

An essential step in the above process is the conveying of the thoroughly cooked, substantially fully dispersed starch, under elevated pressure and temperature, to the spray-dryer atomization nozzle. In the preferred method, a low shear pneumatic nozzle is used, and the transfer is carried out at substantially the same temperature and pressure used in the jet-cooking. The transfer is carried out without any venting to the atmosphere. Atomization in a pressure nozzle may be used. The pressure of the atomization gas (steam or air) used must be sufficient for proper atomization into small droplets to allow rapid drying to an appropriate moisture without retrogradation.

Use of a pressure nozzle in the above process requires insertion of a high pressure pump (141 to 703 $Kg/cm^2$ (2,000 to 10,000 psig)) between the jet-cooker and atomization nozzle. The temperature after passage through the high pressure pump should be maintained substantially equivalent to the jet-cooking chamber temperature. The pressure after the high pressure pump must be sufficient to properly atomize the cook to allow rapid drying to an appropriate moisture without retrogradation.

The spray-dried starch produced by the above process is non-granular and is characterized in that it is substantially non-crystalline and substantially non-retrograded. If the starch is to be converted or otherwise modified, these processes are typically carried out before the coupled jet-cooking/spray-drying process.

Acid-conversion of high amylose starches is preferred due to the ease in handling and recovery during manufacturing afforded by a granular starch as opposed to starch in dispersed form as necessitated by enzyme conversion.

In the preparation of the converted starches by acid-conversion, the granular starch is hydrolyzed to the desired degree in the presence of an acid, such as sulfuric or hydrochloric acid, at a temperature below the gelatinization temperature of the starch. The starch is slurried in water, and the acid (usually in concentrated form) is then added. Typically, the reaction takes place over an 8-16 hour period, after which the acid is neutralized with alkali (e.g., to pH of 5.5), and the starch is recovered by filtration.

It should be appreciated that the degree of conversion, as indicated by the water fluidity, is affected by the amount of acid or enzyme used as well as the time and temperature. The conversion conditions should be adjusted to provide an appropriate water fluidity.

Suitable conversion procedures are described in Handbook of Water-Soluble Gums and Resins, Robert L. Davidson (Editor), Chapter 22: "Starch and Its Modifications" by M. W. Rutenberg, McGraw Hill Book Co. (New York) 1980.

## Pre-Extrusion Process

A pre-extruded, fully predispersed high amylose starch or flour may be provided by the following steps:

(a) forming a slurry or paste of the starch in about 10 to 25% water;
(b) extruding the slurry or paste at a temperature of about 110 to 150°C; and
(c) recovering the starch in a powdered form.

The pre-extrusion process is preferably carried out in a twin-screw extruder, wherein the rotating screws are contained within a horizontal cylindrical barrel with an entry port at one end and a shaping die at the other end. The starch slurry or paste may be extruded in any shape, dried if desired, and ground to any particle size desired for a particular food application.

## Extruded Foods Containing Soluble High Amylose Starch

The extruded foods may be prepared by any extrusion method known in the art, provided that the method is suitable for food formulations containing 1-15% water and an effective amount (up to 75% by weight of the food) of high amylose starch. Extrusion methods which can be carried out at a temperature of up to 160°C and a pressure of up to 35 $Kg/cm^2$ (500 psi) are preferred. The food may be extruded as sheets, rods or other shapes which can be cut and further processed to form desired food products.

The soluble high amylose starches herein can be used in extruded foods alone or in combination with other starches (e.g., fluidity corn or tapioca starches). When a second starch component is present, the soluble high amylose starch must be present in an amount sufficient to provide improved, extruded foods with crisp textures, good expansion volume during extrusion, impervious surfaces or other characteristic advantages of formulation with high amylose starch, at the extrusion temperatures pressures and moisture contents normally used for dry or semi-moist, extruded foods. Typically, the soluble high amylose starch is present in an amount of about 10 to 90%, preferably 25 to 60%, by weight, on a dry solids basis in the starch blend. In foods, the soluble high amylose starch or starch blend is present in an amount typically used for a particular extruded food. Depending on the food, the high amylose starch may be used at levels up to about 75%, on a dry weight basis. Cereal formulations typically contain 5 to 20% starch; breadings, 5 to 20% starch; and snacks, 5 to 60% starch, in addition to the starch contributed by any flour in the cereal formulation.

When a combination of starches is used in the food formulations, the starches can be used as a one-part system, i.e., they may be solubilized by cooking both starches at the same time and then drying the resulting cooked starch blend by the methods disclosed herein. They also can be used as a two-part system in which case the soluble high amylose starch is prepared and added to the food formulation, and the second starch component is blended with the soluble high amylose starch or separately added to the food formulation. In a preferred embodiment, the soluble high amylose starches are dispersed in liquids slowly, with mixing or other shear so they are uniformly wetted and do not lump. They may be pre-mixed or agglomerated to assist in uniform dispersion in liquids.

Starches preferred for use in combination with the soluble high amylose starches include corn, potato, sweet potato, rice, sago, tapioca, waxy maize, sorghum, or the like. Flours may also be used as a starch source.

Among the extruded foods which are improved herein are ready-to-eat, flaked, puffed and expanded cereals. The soluble high amylose containing cereals have improved expansion volume, a crisp eating texture, acceptable mouth feel and acceptable bowl life in milk. Soluble high amylose starches prepared by any method disclosed herein may be used in improved, extruded cereals. Of the debranched starches, crystalline short chain amylose is preferred.

Various extruded snack products may be improved by the addition of soluble high amylose starch. Improvements are similar to those observed for cereals. Much as the bowl life is improved in cereal, the surface moisture resistance in snacks is improved and shelf life, especially in high humidity environments, is extended.

Also included are breading materials (crumbs) extruded and ground to a size acceptable for coating a variety of prepared foods. In a preferred embodiment, crumbs are ground into particles that pass through a #10 U.S. Sieve size screen and are retained on a #20 screen.

These coated foods include battered and breaded items such as chicken, vegetables, cheese, comminuted foods, and the like which may be prepared in conventional or microwave ovens, with or without the additional steps of par-frying and freezing. In addition to preparation by baking, these foods may be prepared by frying, with or without precooking and/or freezing.

The resultant extruded, ground crumb is more effective than conventional bread crumbs in retarding the passage of moisture and water into or out of the food during processing and storage.

Pet foods of the dry or semi-moist variety are included. All or part of the pet food may be extruded by the process herein. For example, in preparing dog food, either "cheese" bits within a semi-moist patty or an entire patty, or both may be extruded by the process disclosed herein.

The group of foods described above exemplifies preferred uses of soluble high amylose starches in extruded foods. The practitioner may readily apply these teachings to other applications in the art. Thus, other extruded foods and other methods of using these starches in extruded foods are included herein.

In the examples which follow, all spray-drying nozzles are obtainable from Spraying Systems Co., Wheaton, Illinois. The following test procedures were used.

## WATER SOLUBILITY MEASUREMENT

### A. Cold Water Solubility

The determination is carried out using distilled water at room temperature. About 0.5 g of starch is dispersed in 30-40 ml of water in a semi-micro stainless steel cup on a Waring blender base (Model 31B292). The blender is run at low speed while the starch is added (all at once) and then run at high speed for 2 minutes. The dispersion is immediately transferred to a 50 ml volumetric flask and diluted to 50 ml with water. A 25 ml portion of the stock dispersion (shaken well to ensure a homogenous dispersion) is removed by pipet and transferred to a 50 ml centrifuge tube. The sample is spun down at 1800-2000 rpms for 15 minutes. Once spun down, 12.5 ml of supernatant is pipetted into a 25 ml volumetric flask, 5 ml of 5 N potassium hydroxide (KOH) are added with swirling, and the mixture is diluted with water. The remainder of the stock dispersion is shaken well, the insoluble starch dispersed with 10 ml of 5 N KOH while swirling. The mixture is diluted to 50 ml with water. The optical rotation of both the concentrated stock solution and the supernatant solution is measured.

6

$$\% \text{ Cold Water Solubles} = \frac{\text{Optical Rotation of Supernatant / Path Length of Supernatant}}{\text{Optical Rotation of Stock Solution / Path Length of Stock Solution}} \times 100$$

**B. Hot Water Solubility**

The procedure is the same as that described above except that boiling distilled water at 90-100°C (194-212°F) is used for dispersing the starch and all subsequent dilutions. No attempt is made to maintain temperature during the procedure.

**WATER FLUIDITY MEASUREMENT**

**A. Water Fluidity (WF)**

The water fluidity of the starches is measured using a Thomas Rotational Shear-Type Viscometer (manufactured by Arthur H. Thomas Co., Philadelphia, PA 19106), standardized at 30°C with a standard oil having a viscosity of 24.73 cps, which oil requires 23.12± 0.05 sec. for 100 revolutions. Accurate and reproducible measurements of the water fluidity are obtained by determining the time which elapses for 100 revolutions at different solids levels depending on the starch's degree of conversion (as conversion increases, the Water Fluidity increases and the viscosity decreases). The procedure used involves slurrying the required amount of starch (e.g., 6.16 g, dry basis) in 100 ml of distilled water in a covered copper cup and heating the slurry in a boiling water bath for 30 minutes with occasional stirring. The starch dispersion is then brought to the final weight (e.g., 107g) with distilled water. The time required for 100 revolutions of the resultant dispersion at 81-83°C is recorded and converted to a water fluidity number using a conversion table.

Table I

| Time Required for 100 Revolutions (seconds) Amount of Starch Used (anhydrous, g) | | | | |
|---|---|---|---|---|
| 6.16[a] | 8.80[b] | 11.44[c] | 13.20[d] | Water Fluidity |
| 60.0 | | | | 5 |
| 39.6 | | | | 10 |
| 29.3 | | | | 15 |
| 22.6 | | | | 20 |
| 20.2 | | | | 25 |
| | 33.4 | | | 30 |
| | 27.4 | | | 35 |
| | 22.5 | | | 40 |
| | | 32.5 | | 45 |
| | | 26.8 | | 50 |
| | | 22.0 | | 55 |
| | | | 24.2 | 60 |
| | | | 19.2 | 65 |
| | | | 15.9 | 70 |
| | | | 13.5 | 75 |
| | | | 11.5 | 80 |
| | | | 10.0 | 85 |
| | | | 9.0 | 90 |

For a, b, c and d, final weights of starch solutions are 107, 110, 113 and 115 g, respectively.

B. Calcium Chloride Viscosity (7.2% Solids Test)

The calcium chloride viscosity of the converted high amylose starch is measured using a Thomas Rotation Shear-Type Viscometer standardized at 30°C. (86°F) with a standard oil having a viscosity of 24.73 cps, which oil requires $23.12 \pm 0.05$ seconds for 100 revolutions. As the conversion of the starch increases, the viscosity of the starch decreases and the calcium chloride viscosity decreases. Accurate and reproducible measurements of the calcium chloride viscosity are obtained by determining the time which elapses for 100 revolutions at a specific solids level.

A total of 7.2 g of the converted starch (anhydrous basis) is slurried in 100 g of buffered 20% calcium chloride solution in a covered semi-micro stainless steel cup (250 ml capacity available from Eberbach), and the slurry is transferred to a glass beaker and is heated in a boiling water bath for 30 minutes with occasional stirring. The starch solution is then brought to the final weight (107.2 g) with hot (approximately 90-100°C (194-212°F)) distilled water. The time required for 100 revolutions of the resultant solution at 81-83°C (178-181°F) is measured three times in rapid succession and the average of the three measurements is recorded.

The calcium chloride solution is prepared by dissolving 264.8 g of reagent grade calcium chloride dihydrate in 650 ml of distilled water in a tared 1 L glass beaker. Thereafter 7.2 g of anhydrous sodium acetate is dissolved in the solution. The solution is allowed to cool and the pH is measured. If necessary, the solution is adjusted with hydrochloric acid to pH $5.6 \pm 0.1$. The solution is then brought to weight (1007.2 g) with distilled water.

**GEL PERMEATION CHROMATOGRAPHY**

Starches were prepared for analysis by slurrying 5 mg of enzymatically debranched starch in 4 ml of dimethylsulfoxide ("DMSO") containing 0.3M sodium nitrate and heating the slurry to 80°C for at least 30 minutes. Samples (200 ml) were injected into an ALC/GPC-150C Chromatograph (Waters Associates, Milford, Massachusetts) (equipped with a Nelson 3000 Series Chromatography Data System and two PLgel mixed 10 mm columns (Polymer Laboratory, Amherst, Massachusetts), employing DMSO containing 0.03 M sodium nitrate as the mobile phase), and diluted at a rate of 1 ml/min. The columns were calibrated using dextran standards (with molecular weights of 2,000; 20,000; 80,000; 500,000; and 2,000,000, obtained from Pharmacia Fine Chemicals, Piscataway, New Jersey). The percentage short chain amylose was calculated from the relative area of the peak obtained within the molecular weight range from about 500 to 20,000.

## EXAMPLE 1

This example illustrates the preparation of soluble high amylose starch by the coupled jet-cooking/spray-drying process.

### Part A

The process variables used for jet-cooking/spray-drying unmodified high amylose (about 70% amylose) corn starch are shown below, in Table II. A slurry of unmodified granular high amylose starch was fed into a jet-cooker (model C-15 available from National Starch and Chemical Company). Steam was metered into the slurry to cook the starch and the cooked starch was conveyed to a pneumatic atomization nozzle top mounted in a 10.68 meter (35 foot) tall, 4.88 meter (16 foot) diameter Hensey spray-dryer. Steam at 8.44 Kg/cm$^2$ (120 psig) was used to atomize the starch. The atomized starch mist was dried with air at 204°C (400°F).

Table II

| Process Conditions for Jet Cooking/Spray Drying High Amylose Starch | | |
|---|---|---|
| | Part A | Part B |
| Slurry Solids | 32.0% | 26.2% |
| Cook Solids | 28.0% | 25.0% |
| Jet Cooking Temperature °C (°F) | 143 (290) | 163 (325) |
| Steam Flow | 4.2 Kg/cm$^2$ (9.25 lb/min) | ---- |
| Cook Flow L/min (gal/min) | 14.4 (3.8) | 24.6 (6.5) |
| Nozzle Type[a] | 1J-152 | 1J-152 |
| Dryer Inlet Temp °C (°F) | 230-191 (446-375) | 230-191 (446-375) |
| Dryer Outlet Temp °C (°F) | 82-96 (180-205) | (82-96) (180-205) |
| Atomizing Steam Kg/cm$^2$ (psig) | 8.44 (120.0) | 8.44 (120) |

a. Pneumatic nozzle obtained from Spraying System, Inc. (Model 1J; two-fluid).

The cold water solubility of the non-granular starch powder was 97.4% and the hot water solubility was greater than 99%.

### Part B

Under process conditions shown above, in Table II, a converted high amylose corn starch (about 70% amylose) was processed using the coupled jet-cooking/spray-drying process. A slurry of the starch was treated with 2.5% hydrochloric acid at 52°C (126°F) for 16 hours to give a converted starch having a calcium chloride viscosity of 25 seconds. After neutralization with sodium carbonate to a pH of about 6, the granular converted starch was filtered, washed and dried. The starch was then jet-cooked, and the jet-cooked starch dispersion was conveyed to a pneumatic atomization nozzle top mounted in a 10.68 meter (35 foot) tall, 4.88 meter (16 foot) diameter Hensey spray-dryer. The atomized starch mist was dried with air at 204°C (400°F).
The converted starch powder was 93.0% soluble in cold water and 97.1% soluble in hot water.

## EXAMPLE 2

This example illustrates the preparation of soluble high amylose starch by steam-injection/dual-atomization or single-atomization spray-drying processes.

Unmodified granular corn starch containing about 70% amylose was slurried in water at 25.5% solids. This slurry was pumped by a Matt and Gaulin triplex pump at about 9.08 Liters (2.4 gallons) per minute under about 352 Kg/cm$^2$ (5,000 psig) to three steam atomization nozzles (dual-atomization nozzles as described in Figure 1 of U.S. Pat. No. 4,280,851, issued July 28, 1981, to Pitchon, et al.), mounted at the top of a 10.68 meter (35 foot) tall, 4.88 meter (16 foot) diameter Hensey spray-dryer. Steam at about 11.6 Kg/cm$^2$ (165 psig) was used to gelatinize and atomize the starch. Air at 200°C (396°F) was used to dry the atomized starch mist.

The recovered granular pregelatinized starch powder had a cold water solubility of about 75 percent and a hot water solubility of about 95 percent.

## EXAMPLE 3

This example illustrates the enzymatic preparation of starch containing either soluble or crystalline short chain amylose, and, optionally, long chain amylose, wherein the starch product comprises at least 65% total amylose.

## PREPARATION OF THE DEBRANCHED STARCH

The starches were converted, crosslinked, derivatized or dextrinized, where applicable, prior to gelatinization and treatment with a pullulanase enzyme. An aqueous slurry (20-30% solids) was prepared employing a native starch, or where applicable, a modified starch. The aqueous starch slurry was jet cooked at approximately 149°C (300°F) to gelatinize the starch. The cooked starch dispersion was placed in a constant temperature bath at 58-60°C with constant stirring. The pH was adjusted to 5 with 3% hydrochloric acid.

Depending on the type of starch used and its amylopectin content, between 0.5 and 10.0 mls of pullulanase per 100 g of starch were added to the cooked starch dispersion. The pullulanase (E.C. 3.2.1 41, pullulan 6-glucanohydrolase) which was used is a starch debranching enzyme produced by a novel species of Bacillus. This enzyme (Promozyme®) was obtained from Novo Industri A/S of Denmark. The enzymatic activity of a 1.25 g/ml solution of Promozyme is standardized at 200 PUN/ml of solution. One PUN (Pullulanase Unit Novo) is the amount of enzyme which, under standard conditions, hydrolyzes pullulan, liberating reducing carbohydrate with a reducing power equivalent to 1 micro-mol glucose per minute. The procedure for determining PUN is available from Novo Industri A/S. Thus, for example, in a starch dispersion employing corn starch, 125 PUN of pullulanase per 100 g corn starch were added to the dispersion. For a waxy maize starch dispersion (with higher amylopectin content), 750 PUN of pullulanase per 100 g waxy maize starch were added to the dispersion.

The pullulanase was permitted to debranch the starch until at least a total of 65% amylose had been reached. The pullulanase was deactivated in preparing debranched starch by heating the dispersion to at least 80°C. The starch dispersion was spray-dried at an inlet temperature of 200-210°C and an outlet temperature of 120-125°C. The spray dried-starch was screened through #40 mesh screen.

## PREPARATION OF SHORT CHAIN AMYLOSE

### Part A. Crystalline

A 28% solids slurry of waxy maize starch in water was jet cooked at 149°C (300°F) to yield a 25% solids starch dispersion. The dispersion was placed into a constant temperature water bath at 60°C, the pH was adjusted to 5.0, and 8 mls of the Promozyme pullulanase/100 g starch were added to the dispersion. The enzyme reaction was permitted to continue with continuous stirring for 88 hours.

Upon standing, a crystalline precipitate was formed in the milky starch dispersion. This precipitate was filtered, washed three times and air-dried to yield crystalline short chain amylose in about 85% yield. Gel permeation chromatography indicated the product contained 84% short chain amylose.

The crystalline short chain amylose was not soluble in cold water. It was 23% soluble in hot water, and after continued heating for 20 minutes, was 98% soluble in hot water.

### Part B. Soluble

A second dispersion of waxy maize starch was debranched in the same manner as Part A, except that the enzyme reaction was continued for 48 hours and filtering and washing steps were omitted. Thereafter the dispersion was spray-dried at 26% solids in a Niro laboratory spray-drier at an inlet temperature of 210°C and an outlet temperature of 125°C. The product, which comprised 78% short chain amylose, was recovered in about 75% yield.

The starch was 100% soluble in cold and hot water.

## EXAMPLE 4

This example illustrates the preparation of ready-to-eat extruded cereal containing soluble high amylose starch.

The soluble high amylose starches and controls listed in Table III, below were prepared by the methods of Examples 1-3 and incorporated into the following cereal formulation.

| CEREAL FORMULATION | | | | |
|---|---|---|---|---|
| Ingredient | Control | | Experimental | |
| | % (by weight) | Weight (grams) | % (by weight) | Weight (grams) |
| Starch | 0 | 0 | 10 | 100 |
| Corn Flour | 75 | 7,500 | 60 | 600 |
| Oat Flour | 10 | 1,000 | 15 | 150 |
| Wheat Flour | 10 | 1,000 | 10 | 100 |
| Sugar | 4 | 400 | 4 | 40 |
| Salt | 1 | 100 | 1 | 10 |
| TOTAL | 100% | 10,000 | 100% | 1,000 |

The ingredients for the control were weighed out, charged into a one gallon jar, capped and set on rollers at 100 rpm for three hours to insure sufficient blending. Formulations (1,000g) containing starches were prepared in the same manner by replacing a portion of the corn flour.

The cereal was extruded using a Werner and Pfleiderer OZSK-30 twin-screw, co-rotating extruder (oil heated barrels) with either a Acrison Model #105 feeder, or a Zeranox Model #E-2 feeder.

Extruder conditions were set as follows:

| | |
|---|---|
| Barrel Length | 5 (L/D=15) |
| Screw Configuration | SC-5-18[a] |
| Screw Speed | 250 rpm |
| Die Diameter | 4 mm |
| Dry Feed Rate | 10 kg/hr |
| Input Moisture | 6.7% |
| Barrel Temperature | 40/150/140°C |

a. SC-5-18 provides 2 reverse flights, 2 kneading blocks and 65% torque.

Cereal formulation blends were fed into the extruder using the above processing conditions. After steady state conditions were obtained (uniformity of exiting extrudates and steady torque reading), samples were handcut at the die using a razor blade and measured for expansion using dial calipers. Samples were immediately toasted in a Narco mechanical convection oven at 200-210°C for 2-6 minutes. Samples were sealed in glass jars to await evaluation.

Control and experimental samples were evaluated by measuring expansion, cereal bowl-life, texture and eating quality. Bowl-life was evaluated by placing 3.5g of cereal in 25.0g of cold milk (35-40°C). Taste panelists made observations, visually and organoleptically, at 1 minute intervals to determine when the cereal became unacceptably soggy. Taste panelists also evaluated samples in milk and in dry form for firmness, stickiness, taste, tooth packing, chewiness, meltaway and overall eating quality.

Results are shown in Tables III and IV.

## Table III [a]

### Evaluation of Extruded Cereals Containing Soluble High Amylose Starch

| Sample | Percent Expansion (diameter) mm | Eating Quality | Bowl Life-minutes (% relative to control) |
|---|---|---|---|
| I Steam-Atomized/Spray-Dried [b] | | | |
| 70% Amylose Starch | 12.0 | Good | 5.5 (300%) |
| 50% Amylose Starch | | | |
| II Jet-Cooked/Spray-Dried [c] | | | |
| 70% Amylose Starch | 12.0 | Good | 6.0 (270%) |
| Acid-converted 70% Amylose Starch | 15.0 | Good | 2.0 (35%) |
| 70% Amylose Corn Flour | -11.0 | Fair | 4.0 (170%) |
| III Debranched [d] | | | |
| Crystalline waxy maize (81% short chain amylose) | 23.0 | Fair | 5.5 (270%) |
| Spray-dried waxy maize (78% short chain amylose) | 15.0 | Fair | 2.5 (70%) |
| Control: No Starch [e] | 13.0 | Good | 1.5 (0%) |
| Control: Granular 70% amylose corn starch [f] | 7.5 | Good | 3.0 (100%) |
| Control: Granular 50% amylose corn starch [f] | 13.0 | Poor | 2.5 (70%) |

12

Table III ᵃ (continued)

Evaluation of Extruded Cereals Containing Soluble High Amylose Starch

| Sample | Percent Expansion (diameter) mm | Eating Quality | Bowl Life-minutes (% relative to control) |
|---|---|---|---|
| Control: Uncooked 70% amylose corn flour[f] | -8.0 | Poor | $\frac{4.0}{(170\%)}$ |
| Control: Modified granular 50% amylose corn starch[g] (5% acetylated) | 15.0% | Poor | $\frac{2.0}{(35\%)}$ |
| Control: Drum-dried, cross-linked waxy maize[h] | 7.5 | Poor | $\frac{2.0}{(35\%)}$ |
| Control: Modified uncooked 70% amylose corn flour[g] (7% Propylene oxide-treated) | 7.5 | Good | $\frac{3.0}{(100\%)}$ |
| Control: Drum-dried corn starch[h] | 13.0 | Good | $\frac{1.0}{(-50\%)}$ |

a. See Example 4 for cereal preparation.
b. Starch was solubilized by the method of Example 2.
c. Starch was solubilized by the method of Example 1.
d. Starch was debranched and solubilized by the method of Example 3 (Part A for crystalline waxy maize).
e. See Cereal Formulation Control in Example 4.
f. Starches and flour were not solubilized before formulating the cereal.
g. Starch derivatives were prepared by the methods disclosed in U.S. Pat. No. 4,937,091, issued June 26, 1990, to Zallie, et al.
h. Starches were dried by conventional methods.

The results show that the best overall cereals were formulated with starches containing about 70% amylose which had been solubilized by processes disclosed in Examples 1 and 2. Crystalline debranched starch (containing at least 70% short chain amylose) also was preferred for expansion and bowl life characteristics.

The beneficial properties of the soluble high amylose starches became less apparent as the solubility of the starches increased beyond an optimum point (e.g., spray-dried, debranched waxy maize starch and acid-converted 70% amylose starch); as the molecular weight decreased (e.g., acid converted 70% amylose starch); and as the percentage amylose decreased (e.g., the flours vs. the starches; and 50% vs. 70% amylose starch).

A second experiment (see Table IV) demonstrated that while excellent bowl life could be achieved by formulating cereals with 50-70% amylose starches that had <u>not</u> been solubilized, these cereals were commercially unacceptable. The cereal containing the insoluble starch was very hard, the texture was tough and the eating quality very poor. Notably, expansion during extrusion was much more limited for these samples than for the soluble starch samples.

The control containing no starch was a standard extruded oat cereal, representative of commercially used formulations. The soluble starches containing at least 65% amylose had expansion and eating qualities clearly superior to those of the control containing no starch.

Table IV

| Evaluation of Extruded Cereals Containing Extruded High Amylose Starch | | | | |
|---|---|---|---|---|
| Sample [a] <u>Process:</u> Starch | Expansion mm (inches) | Crispness [b] | Bowl Life [c] | Overall Eating Quality [d] |
| <u>Control:</u> No starch | 4.32 (.170) | 4 | 10 | 18 |
| <u>Control:</u> Granular 50% amylose starch | 4.01 (.158) | 3 | 10 | 16 |
| <u>Control:</u> Granular 70% amylose starch | 4.34 (.171) | 3 | 10 | 17 |
| <u>Control:</u> Modified granular 50% amylose starch [f] | 4.88 (.192) | 3 | 6 | 14 |
| <u>Steam-atomized spray dried [e]:</u> 70% amylose starch | 6.45 (.254) | 10 | 6 | 24 |
| Jet-cooked/spray-dried g: | | | | |
| 70% amylose starch | 5.97 (.235) | 8 | 5 | 20 |
| Converted 70% amylose starch [h] | 7.32 (.288) | 9 | 8 | 27 |

a. Cereals contained 70% oat flour, 20% corn flour, 10% sugar. Treatments contain 15% starch in place of an equal quantity of corn flour.
b. 10 = most crisp
c. Subjective evaluation of 10g cereal in 100g milk after 6 minutes. 10 = longest bowl life.
d. Subjective evaluation which includes bowl life, expansion, texture and crispness. 30 = highest eating quality.
e. Starch was steam-atomized/spray-dried by the method of Example 2.
f. Acetylated (5%) corn starch containing about 50% amylose.
g. Starches were jet-cooked/spray-dried by the method of Example 1.
h. Starch containing 70% amylose was acid-converted to 35WF.

Example 5

This example illustrates the preparation of an improved ready-to-eat cereal formulated with a pre-extruded, fully predispersed high amylose starch flour.

Part A: Pre-Extrusion Process

A sample of fully predispersed, 70% amylose starch-containing flour (Microcrisp® flour, obtained from National Starch and Chemical Company, Bridgewater, New Jersey) was extruded under the extrusion conditions set out in Example 4, herein, for cereals, except that the flour was slurried in water to give 13.5% input moisture and the barrel temperature was 130°C. The extruded flour was ground to a powder.

Part B: Cereal Extrusion

The extruded flour of Part A, above, was added at a 50% corn flour replacement level to a cereal formulation containing 50 parts corn flour, 40 parts oat flour, and 10 parts sugar. The experimental and control cereals were formulated and extruded by the method of Example 4. Cereal bowl-life was evaluated by the method of Example 4.

The bowl-life of the pre-extruded, fully predispersed high amylose flour-containing cereal was between 1 and 2 minutes longer than that of the control cereal. Thus, the pre-extruded high amylose flour provided improved water resistance and crispness in extruded cereal.

**Claims**

1. A method for preparing a dry, extruded, ready-to-eat, flaked or puffed expanded cereal which consists essentially of the steps of:

    (a) formulating a cereal comprising one or more flours, 1-15% water, and an effective amount of about 5-20% by weight of a pregelatinized, cold or hot water soluble high amylose starch or flour having an amylose content of at least 65% by weight, which starch or flour is selected from the group consisting of (1) a jet-cooked/spray-dried non-granular high amylose starch, characterized in that the starch is substantially non-crystalline, substantially non-retrograded, and fully predispersed; (2) a simultaneously cooked and spray-dried granular high amylose starch characterized in that the starch is uniformly gelatinized and in the form of granular indented spheres, with at least a majority of the granules being whole and unbroken and being in the form of loosely-bound agglomerates or individual granules; (3) a pre-extruded, fully predispersed high amylose starch or flour; or (4) a combination thereof;
    (b) extruding the cereal at a temperature of up to 160°C and at a pressure of up to 500 psi;
    (c) cutting the extrudate into pieces; and
    (d) toasting the cut extruded pieces.

2. The method of claim 1, wherein the food is formulated with solubilized high amylose starch (1) and the starch is prepared by a process comprising the steps of:

    (a) forming a slurry or a paste comprising a converted or unconverted high amylose starch and water;
    (b) jet-cooking the aqueous slurry or paste of the starch with steam at a temperature sufficient to fully disperse or solubilize the starch;
    (c) conveying and introducing the jet-cooked dispersion or solution into a nozzle of a spray-dryer at substantially the same temperature and pressure as the jet-cooking step;
    (d) atomizing the jet-cooked dispersion or solution through the nozzle of the spray-dryer;
    (e) drying the atomized mist of the jet-cooked starch within the spray-dryer; and
    (f) recovering the jet-cooked and spray-dried starch as a water-soluble powder.

3. The method of Claim 1, wherein the food is formulated with solubilized high amylose starch (2) and the starch is prepared by a process comprising the steps of:

    (a) slurrying the starch in an aqueous medium;
    (b) atomizing the slurry into an enclosed chamber;
    (c) interjecting a heating medium into the atomized slurry in the enclosed chamber to cook the starch, said chamber containing a vent aperture positioned to enable the atomized slurry to exit the chamber, the size and shape of the chamber and the vent aperture being effective to maintain the temperature and moisture of the material for a period of time sufficient to cook the starch; and
    (d) drying the atomized starch.

4. The method of Claim 1, wherein the food is formulated with solubilized high amylose starch (2) and the starch is prepared by a process comprising the steps of:

    (a) slurrying the starch in an aqueous medium;
    (b) feeding a stream of the starch slurry at a pressure from about 50 to 250 psig into an atomizing chamber within a spray-drying nozzle;
    (c) injecting a heating medium into the atomizing chamber at a pressure from about 3.52 to 17.58 Kg/cm$^2$ (50 to 250 psig);
    (d) simultaneously cooking and atomizing the starch slurry as the heating medium forces the starch through a vent in the chamber; and
    (e) drying the atomized starch.

5. The method of claim 1, wherein the food is formulated with solubilized high amylose starch or flour (3) and the starch or flour is prepared by a process comprising the steps of:

(a) forming a slurry of the starch or flour in water;

(b) extruding the starch or flour slurry at a temperature of from 110 to 150°C; and

(c) recovering the starch or flour as a soluble powder.

6. The method of Claim 1, wherein the solubilized high amylose starch is modified by conversion prior to being solubilized.

7. A cereal obtainable by the method of Claim 1, wherein the cereal is puffed cereal and the flour is selected from the group consisting of corn, wheat, and/or oat flour.

8. A cereal obtainable by the method of Claim 1, wherein the cereal is the flaked cereal and the flour is selected from the group consisting of corn, wheat, and/or oat flour.

9. A cereal obtainable by the method of Claim 1, wherein the high amylose starch has an amylose content of 70%.

10. A cereal obtainable by the method of Claim 1, wherein the high amylose starch has an amylose content of 70% and is modified by acid conversion.

**Patentansprüche**

1. Verfahren zur Herstellung von trockenen, extrudierten, verzehrfertigen, flockig oder aufgebläht expandierten Cerealien, das im wesentlichen aus den Schritten besteht:

(a) Formulieren von Cerealien, umfassend ein oder mehrere Mehle, 1-15% Wasser und eine wirksame Menge von etwa 5-20 Gew.-% einer vorverkleisterten, in kaltem oder heißem Wasser löslichen amylosereichen Stärke oder eines Mehls mit einem Amylosegehalt von mindestens 65 Gew.-%, wobei die Stärke oder das Mehl ausgewählt ist aus der Gruppe, bestehend aus (1) einer dampfstrahlgekochten/sprühgetrockneten nicht-körnigen, amylosereichen Stärke, dadurch charakterisiert, daß die Stärke im wesentlichen nicht-kristallin, im wesentlichen nicht-retrogradiert und vollständig vordispergiert ist; (2) einer gleichzeitig gekochten und sprühgetrockneten körnigen, amylosereichen Stärke, dadurch charakterisiert, daß die Stärke gleichmäßig verkleistert und in Form von körnigen eingedrückten Kugeln vorliegt, wobei wenigstens die Mehrzahl der Granulate ganz und unzerbrochen in Form von locker gebundenen Agglomeraten oder einzelnen Granulaten vorliegen: (3) einer vorextrudierten, vollständig vordispergierten, amylosereichen Stärke oder eines Mehls: oder (4) einer Kombination hiervon;

(b) Extrudieren der Cerealien bei einer Temperatur von bis zu 160°C und bei einem Druck von bis zu 500 psi:

(c) Zerschneiden des Extrudats in Stücke; und

(d) Rösten der geschnittenen extrudierten Stücke.

2. Verfahren nach Anspruch 1, worin das Nahrungsprodukt mit löslichgemachter, amylosereicher Stärke (1) formuliert wird, und die Stärke hergestellt wird durch ein Verfahren mit den Schritten:

(a) Formen einer Schlämme oder Paste, die eine umgewandelte oder nichtumgewandelte amylosereiche Stärke und Wasser umfaßt;

(b) Dampfstrahlkochen der wäßrigen Stärkeschlämme oder -paste mit Dampf bei einer zum vollständigen Dispergieren oder Löslichmachen der Stärke ausreichenden Temperatur;

(c) Befördern und Einführen der dampfstrahlgekochten Dispersion oder Lösung in eine Düse eines Sprühtrockners bei im wesentlichen derselben Temperatur und demselben Druck wie beim Dampfstrahlkoch-Schritt;

(d) Zerstäuben der dampfstrahlgekochten Dispersion oder Lösung durch die Düse des Sprühtrockners:

(e) Trocknen des zerstäubten Nebels der dampfstrahlgekochten Stärke im Sprühtrockner: und

(f) Wiedergewinnen der dampfstrahlgekochten und sprühgetrockneten Stärke als wasserlösliches Pulver.

3. Verfahren nach Anspruch 1, worin das Nahrungsprodukt mit löslichgemachter. amlosereicher Stärke (2) formuliert wird, und die Stärke hergestellt wird durch ein Verfahren mit den Schritten:

(a) Aufschlämmen der Stärke in einem wäßrigen Medium:

(b) Zerstäuben der Schlämme in einer abgeschlossenen Kammer;

(c) Einbringen eines Heizmediums in die zerstäubte Schlämme in der abgeschlossenen Kammer, um die Stärke zu kochen, wobei die Kammer eine derart angebrachte Auslaßöffnung enthält, daß die zerstäubte Schlämme die Kammer verlassen kann, und die Größe und Form der Kammer sowie der Auslaßöffnung so ausgelegt sind, daß die Temperatur und die Feuchtigkeit des Materials für eine ausreichend lange Zeitspanne aufrechterhalten werden. um die Stärke zu kochen; und

(d) Trocknen der zerstäubten Stärke.

4. Verfahren nach Anspruch 1, worin das Nahrungsprodukt mit löslichgemachter, amylosereicher Stärke (2) formuliert wird, und die Stärke hergestellt wird durch ein Verfahren mit den Schritten:

(a) Aufschlämmen der Stärke in einem wäßrigen Medium:
(b) Zuführen eines Stroms der Stärkeschlämme in eine Zerstäubungskammer in einer Sprühtrockendüse bei einem Druck von etwa 50 bis 250 psig:
(c) Einführen eines Heizmediums in die Zerstäubungskammer bei einem Druck von etwa 3,52 bis 17,58 kg/cm$^2$ (50 bis 250 psig);
(d) gleichzeitiges Kochen und Zerstäuben der Stärkeschlämme während das Heizmedium den Durchtritt der Stärke durch eine Öffnung in der Kammer bewirkt; und
(e) Trocknen der zerstäubten Stärke.

5. Verfahren nach Anspruch 1, worin das Nahrungsprodukt mit löslichgemachter, amylosereicher Stärke oder Mehl (3) formuliert wird, und die Stärke oder das Mehl hergestellt werden durch ein Verfahren mit den Schritten:

(a) Bilden einer Schlämme aus der Stärke oder dem Mehl in Wasser;
(b) Extrudieren der Stärke- oder Mehlschlämme bei einer Temperatur von 110 bis 150°C; und
(c) Wiedergewinnen der Stärke oder des Mehls als lösliches Pulver.

6. Verfahren nach Anspruch 1, worin die löslichgemachte, amylosereiche Stärke vor dem Löslichmachen durch Umwandeln modifiziert wird.

7. Cerealien, erhältlich durch das Verfahren nach Anspruch 1, worin die Cerealien aufgeblähte Cerealien sind und das Mehl ausgewählt ist aus der aus Mais, Weizen und/oder Hafermehl bestehenden Gruppe.

8. Cerealien, erhältlich durch das Verfahren nach Anspruch 1, worin die Cerealien flockige Cerealien sind und das Mehl ausgewählt ist aus der aus Mais, Weizen und/oder Hafermehl bestehenden Gruppe.

9. Cerealien, erhältlich durch das Verfahren nach Anspruch 1, worin die amylosereiche Stärke einen Amylosegehalt von 70% besitzt.

10. Cerealien, erhältlich durch das Verfahren nach Anspruch 1, worin die amylosereiche Stärke einen Amylosegehalt von 70% besitzt und durch Säureumwandlung modifiziert ist.

**Revendications**

1. Procédé pour préparer une matière à base de céréales, sèche, extrudée, prête à la consommation, en flocons ou soufflée, qui comprend essentiellement les étapes consistant :

(a) à formuler une matière à base de céréales comprenant une ou plusieurs farines, 1 à 15 % d'eau et une quantité efficace d'environ 5 à 20 % en poids d'un amidon ou d'une farine à haute teneur en amylose, prégélatinisé, soluble dans l'eau froide ou chaude, ayant une teneur en amylose d'au moins 65 % en poids, amidon ou farine qui est choisi dans le groupe consistant (1) un amidon non granulaire à haute teneur en amylose obtenu par cuisson par jet/séchage par pulvérisation, caractérisé en ce que l'amidon est essentiellement non cristallin, pratiquement non rétrogradé et totalement prédispersé ; (2) un amidon granulaire à haute teneur en amylose ayant subi simultanément une cuisson et un séchage par pulvérisation, caractérisé en ce que l'amidon est gélatinisé uniformément et est sous forme de sphères indentées granulaires, au moins une quantité dominante des granules étant constituée de granules entiers et non brisés et étant sous forme d'agglomérats faiblement liés ou de granules distincts ; (3) un amidon ou une farine à haute teneur en amylose pré-extrudé, totalement prédispersé ; ou (4) une de leurs associations ;
(b) à extruder la matière à base de céréales à une température allant jusqu'à 160°C et à une pression allant jusqu'à 500 psi ;

17

(c) à couper l'extrudat en morceaux ; et

(d) à faire griller les morceaux extrudés coupés.

2. Procédé suivant la revendication 1, dans lequel le produit alimentaire est formulé avec un amidon solubilisé à haute teneur en amylose (1) et l'amidon est préparé par un procédé comprenant les étapes consistant :

(a) à former une suspension ou une pâte comprenant un amidon à haute teneur en amylose, saccharifié ou non saccharifié, et de l'eau ;

(b) à soumettre à une cuisson par jet la suspension ou pâte aqueuse de l'amidon avec de la vapeur d'eau à une température suffisante pour disperser ou solubiliser totalement l'amidon ;

(c) à véhiculer et introduire la dispersion ou solution ayant subi une cuisson par jet dans une buse d'un appareil de séchage par pulvérisation à une température et une pression pratiquement identiques à celle de l'étape de cuisson par jet ;

(d) à atomiser la dispersion ou solution ayant subi une cuisson par jet à travers la buse de l'appareil de séchage par pulvérisation ;

(e) à sécher le brouillard atomisé de l'amidon ayant subi une cuisson par jet dans l'appareil de séchage par pulvérisation ; et

(f) à recueillir l'amidon ayant subi une cuisson par jet et un séchage par pulvérisation, sous forme d'une poudre hydrosoluble.

3. Procédé suivant la revendication 1, dans lequel le produit alimentaire est formulé avec un amidon solubilisé à haute teneur en amylose (2) et l'amidon est préparé par un procédé comprenant les étapes consistant :

(a) à mettre en suspension l'amidon dans un milieu aqueux ;

(b) à atomiser la suspension dans une enceinte close ;

(c) à projeter un milieu chauffant dans la suspension atomisée dans l'enceinte close pour cuire l'amidon, ladite enceinte contenant un orifice d'évacuation positionné pour permettre à la suspension atomisée de quitter l'enceinte, les dimensions et la forme de l'enceinte et l'orifice d'évacuation étant efficaces pour maintenir la température et l'humidité de la substance pendant un temps suffisant pour la cuisson de l'amidon ; et

(d) à sécher l'amidon atomisé.

4. Procédé suivant la revendication 1, dans lequel le produit alimentaire est formulé avec un amidon à haute teneur en amylose solubilisé (2) et l'amidon est préparé par un procédé comprenant les étapes consistant :

(a) à mettre en suspension l'amidon dans un milieu aqueux ;

(b) à introduire un courant de la suspension d'amidon à une pression d'environ 50 à environ 250 psig dans une enceinte d'atomisation à l'intérieur d'une buse de séchage par pulvérisation ;

(c) à injecter un milieu chauffant dans l'enceinte d'atomisation à une pression comprise dans l'intervalle d'environ 3,52 a 17,58 kg/cm$^2$ (50 à 250 psig) ;

(d) à cuire et atomiser simultanément la suspension d'amidon lorsque le milieu chauffant contraint l'amidon à passer à travers un orifice d'évacuation dans l'enceinte ; et

(e) à sécher l'amidon atomisé.

5. Procédé suivant la revendication 1, dans lequel le produit alimentaire est formulé avec un amidon ou une farine à haute teneur en amylose solubilisé (3) et l'amidon ou la farine est préparé par un procédé comprenant les étapes consistant :

(a) à former une suspension de l'amidon ou de la farine dans de l'eau ;

(b) à extruder la suspension d'amidon ou de farine à une température de 110 à 150°C ; et

(c) à recueillir l'amidon ou la farine sous forme d'une poudre soluble.

6. Procédé suivant la revendication 1, dans lequel l'amidon à haute teneur en amylose solubilisé est modifié par saccharification avant sa solubilisation.

7. Matière à base de céréales pouvant être obtenue par le procédé suivant la revendication 1, dans laquelle les céréales sont des céréales soufflées et la farine est choisie dans le groupe consistant en farine de maïs, farine de blé et/ou farine d'avoine.

8. Matière à base de céréales pouvant être obtenue par le procédé suivant la revendication 1, dans laquelle les céréales sont des céréales en flocons et la farine est choisie dans le groupe consistant en la farine de maïs, la farine de blé et/ou la farine d'avoine.

9. Matière à base de céréales pouvant être obtenue par le procédé suivant la revendication 1, dans laquelle l'amidon à haute teneur en amylose a une teneur en amylose de 70 %.

10. Matière à base de céréales pouvant être obtenue par le procédé suivant la revendication 1, dans laquelle l'amidon à haute teneur en amylose a une teneur en amylose de 70 % et est modifié par hydrolyse acide.